Europäisches Patentamt

European Patent Office

Office européen des brevets

(19)

(11) Veröffentlichungsnummer: **0 024 507**

**A1**

(12) # EUROPÄISCHE PATENTANMELDUNG

(21) Anmeldenummer: **80103699.7**

(22) Anmeldetag: **30.06.80**

(51) Int. Cl.³: **E 21 D 15/00**

(30) Priorität: **01.09.79 DE 2935401**

(43) Veröffentlichungstag der Anmeldung:
**11.03.81 Patentblatt 81/10**

(84) Benannte Vertragsstaaten:
**AT BE CH FR GB IT LI LU NL SE**

(71) Anmelder: **VEREINIGTE ALUMINIUM-WERKE AKTIENGESELLSCHAFT**
**Postfach 2468 Georg-von-Boeselager-Strasse 25**
**D-5300 Bonn 1(DE)**

(72) Erfinder: **Gruhl, Wolfgang, Dipl.-Ing.**
**Kaninsberg 7**
**D-5300 Bonn 3(DE)**

(74) Vertreter: **Müller-Wolff, Thomas, Dipl.-Ing.**
**Georg-von-Boeselager-Strasse 25 Postfach 2468**
**D-5300 Bonn 1(DE)**

(54) **Verwendung eines Verbundwerkstoffes auf Aluminiumbasis.**

(57) Bei einem Verbundwerkstoff auf der Basis von Aluminium soll die Zündfunkenbildung infolge Reibschlag an rostigen Stahlteilen verhindert und gleichzeitig eine wirtschaftliche Herstellung des Verbundwerkstoffes ermöglicht werden. Dies geschieht durch die Verwendung eines Verbundwerkstoffes auf Aluminiumbasis mit mindestens einer Deckschicht aus einem niedrigschmelzenden weichen Metall wie Blei, Kadmium, Zinn und/oder Zink in einer explosionsgefährdeten Umgebung, insbesondere im Bergbau.

EP 0 024 507 A1

Croydon Printing Company Ltd.

Verwendung eines Verbundwerkstoffes auf Aluminiumbasis

Die Erfindung betrifft die Verwendung eines Verbundwerkstoffes, bestehend aus einem Kern aus Aluminium oder einer Aluminiumlegierung und mindestens einer Deckschicht aus einem niedrigschmelzenden weichen Metall wie Blei, Kadmium, Zinn und/oder Zink in einer explosionsgefährdeten Umgebung, insbesondere im Bergbau.

Verbundwerkstoffe der eingangs genannten Art auf Aluminiumbasis mit Deckschichten aus Blei, Kadmium, Zinn oder Zink sind bekannt. So ist beispielsweise im Aluminium-Taschenbuch, 13.Aufl., S.720 Mitte, erwähnt, daß Plattierungen des Aluminiumgrundwerkstoffes mit den genannten Stoffen möglich sind. Auf S.721 der genannten Literaturstelle ist unter dem Kapitel "Metallspritzen" die Herstellung von Überzügen aus Zink, Kadmium, Blei u.a. auf Aluminium beschrieben. Der Einsatzbereich der genannten Verbundwerkstoffe beschränkt sich auf wenige Spezialfälle: Zink wird durch Diffusionsplattierung als Korrosionsschutz aufgebracht (Japan Light Metal 21 (3), 137-146, 1971), Zinn wird elektrolytisch auf Al-Leiter und Sammelschienen abgeschieden (Rev.Al.50 (12) Nr.424, 667-674, 1973). Bleibeschichtung siehe FR-PS 2 050 288.

In den überwiegenden Anwendungsfällen wird Aluminium ohne metallischen Überzug eingesetzt. In manchen Anwendungsfällen, beispielsweise bei der Lagerung und beim Transport von brennbaren Flüssigkeiten und Gasen, bei Abwasseranlagen und im Kohlebergbau, wurde eine Funkenbildung zwischen den Aluminiumteilen und rostigen Stahlteilen durch Reibschlag beobachtet. Man nimmt an, daß durch die Schlagenergie örtlich Temperaturen erzeugt werden, die in der Lage sind, bei einem Gemisch von Aluminium und Eisenoxid bzw. Rost eine aluminothermische Reaktion zu erzeugen, die ihrerseits die Zündung eines Gas-Gemisches bewirkt.

Es ist auch möglich, zündfähige Funken zu erzeugen, wenn eine Aluminiumfolie auf ein rostiges Stahlteil aufgebracht und mit einem Werkzeug aus beliebigem Material ein Reibschlag durchgeführt wird. Ebenso treten Zündungen auf, wenn Rost oder Eisenoxid in die Oberfläche eines Aluminiumwerkstückes eingedrückt wird und dann ein Reibschlag erfolgt.

Zur Vermeidung der Explosionsgefahr ist bisher eine harte und verschleißfeste Beschichtung der Aluminiumteile vorgeschlagen worden. Dadurch sollte die Schlagfestigkeit erhöht und ein Freilegen der Aluminiumoberfläche verhindert werden. So werden Bergbaustempel mit Band aus rostfreiem Stahl ummantelt, hartverchromt oder auch mit rostfreiem Stahl bespritzt. Diese Verfahren sind jedoch sehr kostenaufwendig und nur in Ausnahmefällen wirtschaftlich einsetzbar.

Nach der DE-PS 924.171 ist es bekannt, zur Vermeidung von Funkenbildung bei Grubenstempeln mindestens die unter Reibung zusammenwirkenden Flächen aus solchen Legierungen herzustellen, bei deren Zusammenwirken keine Funkenbildung auftritt. Zu diesem Zweck werden hochvergütete Aluminiumlegierungen mit Gehalten an Zink bis zu 10 % und an Magnesium bis zu 5 % sowie hochfeste Kupferlegierungen wie Aluminiumbronzen oder besonders ausgehärtete Kupfer-Beryllium-Legierungen, ferner Nickellegierungen oder rostsichere Stähle, zum Beispiel solche, deren Gesamtgehalt an Nickel und Chrom 10 % übersteigt, vorgeschlagen. Nach dem bekannten Verfahren ist ferner vorgesehen, an den reibenden Flächen eine Oberflächenbehandlung vorzunehmen, die eine Funkenbildung ausschließt. Hierzu werden Diffusionsverfahren erwähnt, bei denen in die Oberflächenschicht bestimmte Legierungsbestandteile wie Nickel, Chrom, Aluminium oder Kupfer eingebracht werden. Diese Verfahren sind sehr aufwendig und haben nicht immer den gewünschten Erfolg gezeigt.

Aufgabe der vorliegenden Erfindung ist es, einen Verbundwerkstoff auf der Basis von Aluminium zu entwickeln, der die Zündfunkenbildung infolge Reibschlag an rostigen Stahlteilen verhindert und gleichzeitig wirtschaftlich herstellbar ist. Die Aufgabe wird erfindungsgemäß gelöst durch die Verwendung eines Verbundwerkstoffes auf Aluminiumbasis mit mindestens einer Deckschicht aus einem niedrigschmelzenden weichen Metall wie Blei, Kadmium, Zinn und/oder Zink in einer explosionsgefährdeten Umgebung, insbesondere im Bergbau. Dabei soll unter dem Begriff "Aluminiumbasis" sowohl Reinaluminium als auch dessen Legierungen verstanden werden. Die Deckschicht soll aus einer Legierung mit überwiegendem Gehalt an einem der genannten Metalle bestehen.

Zu den niedrigschmelzenden Metallen gehören solche, deren Schmelzpunkt unterhalb von 500°C liegt. Der Begriff "weich" trifft für solche Werkstoffe zu, deren Dehnung $> 20$ % und deren Festigkeit $< 100$ N/mm$^2$ ist. Diese Metalle werden auch durch starke plastische Verformung bei Schlagbeanspruchung nicht wesentlich verfestigt, so daß sie nicht aufreißen oder abplatzen sondern auf der Oberfläche "verschmieren", wobei immer ein dünner Film erhalten bleibt. Eine Deckschicht der erfindungsgemäßen Zusammensetzung weist eine Dicke von 25 bis 500 µm auf und wird beim Schlag mit einem rostigen Eisen- oder Stahlteil verschmiert. Selbst als dünner Film ist diese Deckschicht noch in der Lage, eine direkte Berührung zwischen Aluminium und Rost zu verhindern und damit die zur Erzeugung zündfähiger Funken notwendige aluminothermische Reaktion zu unterbinden.

Der wesentliche Gedanke der Erfindung besteht darin, auf einem den Festigkeitsanforderungen genügenden Basismaterial aus Aluminium oder Aluminiumlegierungen eine weiche, relativ dünne Deckschicht aufzubringen. Diese Deckschicht soll sich bei Raumtemperatur unter einem Reibschlag weich und nachgiebig verhalten, ohne daß dabei ein direkter Kontakt zwischen Schlagwerkzeug und Grundschicht auftreten kann. Der Begriff "schmierfähig" soll andeuten, daß das Schlagwerkzeug auf der Deckschicht leicht abgleitet und diese dabei zwar verformt ohne sie jedoch zu zerstören.

Die Beschichtung kann in sehr einfacher und kostengünstiger Weise durch das an sich bekannte Flammspritzen der gereinigten Oberfläche erfolgen, wobei die Durchführung wegen des niedrigen Schmelzpunktes der Deckschicht besonders einfach ist. Auch eine Erneuerung der Deckschicht kann bei Reparaturarbeiten im eingebauten Zustand der Aluminiumteile durchgeführt werden.

Die Erzeugung der erfindungsgemäßen Deckschichten ist mit Hilfe chemischer oder galvanischer Beschichtungsverfahren oder auch durch Tauchen möglich. Ferner können walzplattierte Halbzeuge verwendet werden.

Der erfindungsgemäße Verbundwerkstoff ist funkenhemmend und kann daher überall dort eingesetzt werden, wo explosive Gas- und Flüssigkeitsgemische vorliegen.

Patentanspruch

Verwendung eines Verbundwerkstoffes, bestehend aus einem Kern aus Aluminium oder einer Aluminiumlegierung und mindestens einer Deckschicht aus einem niedrigschmelzenden weichen Metall wie Blei, Kadmium, Zinn und/oder Zink in einer explosionsgefährdeten Umgebung, insbesondere im Bergbau.

0024507

Nummer der Anmeldung

EP 80 10 3699

# EUROPÄISCHER RECHERCHENBERICHT

Europäisches Patentamt

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | FR - A - 1 127 280 (E. JEENICKE & CO. KG)<br><br>* Das ganze Dokument *<br><br>-- | 1 | E 21 D 15/00 |
| X | TRANSACTIONS OF THE INSTITUTION OF MINING ENGINEERS, 1958-1959, Band 118, Januar 1959, Teil 4, reprint no. 3734, J.C. BAILEY: "Frictional sparking of aluminium", Seiten 223-244<br><br>* Seiten 239-240 "Protective coatings"; Seite 244, linke Spalte, Absatz 1 *<br><br>-- | 1 | |
| A | FR - A - 1 009 846 (BECORIT-GRUBENAUSBAU GmbH)<br><br>* Zusammenfassung, Punkte 1C, 2G *<br><br>----- | 1 | |

**RECHERCHIERTE SACHGEBIETE (Int. Cl.³)**

E 21 D 15/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-11-1980 | LIPPENS |

EPA form 1503.1 06.78